# EUROPÄISCHE PATENTSCHRIFT

(11) **EP 3 866 334 B1**
(45) Veröffentlichungstag und Bekanntmachung des Hinweises auf die Patenterteilung: **12.11.2025**
(21) Anmeldenummer: 21153478.9
(22) Anmeldetag: 26.01.2021
(51) Int. Cl.: H02P 27/08

(54) **PULSWECHSELRICHTER MIT VARIABLER DREHZAHLABHÄNGIGER SCHALTFREQUENZ**
PULSE INVERTER WITH VARIABLE SPEED-DEPENDENT SWITCHING FREQUENCY
ONDULEUR D'IMPULSIONS À FRÉQUENCE DE COMMUTATION VARIABLE EN FONCTION DE LA VITESSE DE ROTATION

(30) Priorität: 14.02.2020 DE 102020103973
(43) Veröffentlichungstag der Anmeldung: 18.08.2021
(73) Patentinhaber: ebm-papst Mulfingen GmbH & Co. KG, 74673 Mulfingen (DE)
(72) Erfinder: WECKERT, Marco, 97980 Bad Mergentheim (DE)
(74) Vertreter: Staeger & Sperling Partnerschaftsgesellschaft mbB

(56) Entgegenhaltungen:
- EP-A1- 3 032 734
- CN-A- 103 780 111
- CN-A- 105 471 361
- DE-A1- 102008 025 446
- JP-A- 2009 118 603
- JP-B1- 6 282 331

## Beschreibung

Die vorliegende Erfindung betrifft ein Verfahren für den Betrieb eines Pulswechselrichters sowie einen Pulswechselrichter mit variabler drehzahlabhängiger Schaltfrequenz.

Es ist bei diversen Anwendungen im Bereich der Antriebstechnik bekannt, für den drehzahlvariablen Betrieb des elektrischen Antriebs einen Gleichspannungszwischenkreis sowie einen nachgeschalteten Pulswechselrichter als Frequenzumrichter vorzusehen. Ein solcher Gleichspannungszwischenkreis dient als Energiespeicher, um das speisende Netzt, dessen Wechselspannung gleichgerichtet wird, vom Wechselrichter, der den elektrischen Antrieb mit Wechselspannung variabler Frequenz speist, zu entkoppeln. Mit dieser schaltungstechnischen Topologie wird ein großer Drehzahlbereich ermöglicht, da der Gleichstromzwischenkreis eine völlige Entkopplung der Rotordrehzahl von der Netzfrequenz bewirkt.

Bekannte Puls-Wechselrichter weisen eine konstante Schaltfrequenz bzw. Taktdauer(auch Pulsfrequenz genannt) auf und über das Verhältnis der Ein- bzw. Ausschaltzeit wird die gewünschte Spannungsform (Sinus, Block, ...) der zu erzeugenden Spannung als Folge von Mittelwerten über eine Pulsperiode der erzeugten Wechselspannung gebildet. Die Taktdauer, innerhalb der die Schalter ein- bzw. ausgeschaltet werden, ist dabei konstant und begrenzt durch die Verlustleistung des Puls-Wechselrichters.

Meist werden solche Wechselrichter eingesetzt, um Drehstrommaschinen mit, im Mittelwert über eine Pulsperiode, sinusförmigen Spannungen variabler Frequenz und Amplitude zu speisen. Des Weiteren werden solche Pulswechselrichter eingesetzt, um die von beispielsweise einem Synchrongenerator erzeugte Wechselspannung in eine Netzspannung fester Frequenz und Amplitude umzurichten. Durch Gleichrichtung der Generatorspannung und Zwischenspeicherung im Zwischenkreis ist es möglich, den Synchrongenerator mit variabler Drehzahl zu betreiben, da wiederum eine Entkopplung der Generatordrehzahl von der Netzfrequenz erfolgt.

Aus der DE 19748479 C1 ist ein Puls-Wechselrichter mit variabler Pulsfrequenz zur Erzeugung eines sinusförmigen Wechselstromes bekannt, wobei die Pulsfrequenz-Änderung abhängig ist vom Verlauf des zu erzeugenden Wechselstromes indem die Pulsfrequenz im Nulldurchgang des zu erzeugenden Wechselstromes um ein Vielfaches größer ist als im Bereich der maximalen Amplitude des Wechselstromes.

Aus den Dokumenten EP 3 032 734 A1, CN 105 471 361 A und CN 103 780 111 A, DE 10 2008 025 446 A1, JP 2009 118 603 A und JP 6 282 331 B1 sind Lösungen zu Pulswechselrichtern nach dem Stand der Technik bekannt, bei der eine Steuerung der Schaltfrequenz des Wechselrichters erfolgt.

In klassischen Industrieanwendungen werden Frequenzumrichter zum Schutz gegen eine Übertemperatur und zur Verhinderung einer Übertemperaturabschaltung mittels variablen Pulsfrequenzen betrieben. Grundlage dafür bilden entweder eine direkte Temperaturerfassung oder eine Kopplung an den Ausgangsstrom.

Damit soll erreicht werden, dass der Frequenzumrichter durch geringere Schaltverluste eine höhere Ausgangsleistung erreichen kann ohne zu überhitzen. Eine weitere Idee die Schaltfrequenz zu variieren ist es, die Temperatur der Leistungshalbleiter möglichst konstant zu halten, was sich günstig auf die Lebensdauer der Leistungsstufe auswirkt. Hierzu bedarf es aber einer Vorausberechnung statischer und dynamischer Temperaturniveaus.

Wünschenswert ist es einen Pulswechselrichter so weiter zu entwickeln, dass eine Leistungserhöhung unter Beachtung der Temperaturanforderungen und der Grenztemperatur der Elektronik ohne aufwändige technische Mittel möglich ist.

Der vorliegenden Erfindung liegt daher die Aufgabe zu Grunde, vorbesagte Nachteile im Stand der Technik zu überwinden und einen optimierten Pulswechselrichterbetrieb vorzuschlagen.

Diese Aufgabe wird durch die Merkmalskombination gemäß Anspruch 1 gelöst.

Erfindungsgemäß wird hierzu ein Pulswechselrichter mit variabel geregelter Schaltfrequenz zur Erzeugung eines sinusförmigen Wechselstromes für einen Motor vorgeschlagen, wobei eine Steuerungseinrichtung vorgesehen ist, um die Schaltfrequenz f_{schalt} des Pulswechselrichters in Abhängigkeit der Drehzahl n des Elektromotors einzustellen, so dass sich Drehzahl-abhängig eine variable Schaltfrequenz für die gewünschten Drehzahlbereiche des Elektromotors realisieren lassen.

In einer bevorzugten Ausgestaltung der Erfindung ist deshalb vorgesehen, dass die Schaltfrequenz f_{schalt} des Pulswechselrichters bei niedrigen Drehzahlen im Drehzahlbereich des angekoppelten Elektromotors mindestens oder oberhalb einer Frequenz von 16 kHz liegt und mit zunehmender Drehzahl abnimmt. Insbesondere bei Lüfterantrieben steigt die vom Pulswechselrichter bereitzustellende Leistung und damit auch die Verlustleistung mit zunehmender Drehzhal an.

Erfindungsgemäß ist die Schaltfrequenz f_{schalt} des Pulswechselrichters unmittelbar an die erfasste Drehzahl des damit betriebenen Elektromotors gekoppelt ist und demnach die jeweils aktuelle Drehzahl n die Steuergröße zur Einstellung der Schaltfrequenz des Pulswechselrichters ist.

Erfindungsgemäß ist hierzu vorgesehen, dass die Schaltfrequenz f_{schalt} des Pulswechselrichters gemäß einer nicht-linearen Funktion in Abhängigkeit der Drehzahl n des damit gekoppelten Elektromotors eingestellt wird. So kann auch gemäß einer vorgegebenen drehzahlabhängigen Algorithmus-Funktion eine ganz bestimmte Schaltfrequenz-Kurve für den Pulswechselrichter realisiert werden.

Erfindungsgemäß ist vorgesehen, dass die Schaltfrequenz f_{schalt} des Pulswechselrichters gemäß einer Stufenfunktion mit einer oder mehrere Stufen anhand der Drehzahl n des damit gekoppelten Elektromotors eingestellt wird, wobei für jeweils einen vorbestimmten Drehzahlbereich nᵢ eine feste Schaltfrequenz f_{schalt,i} des Pulswechselrichters gewählt wird. Auf diese Weise kann eine Anzahl an Stufen eingerichtet sein, um für jeweils ein bestimmtes Drehzahlfenster nur einen vordefinierten Wert für die entsprechende Schaltfrequenz f_{schalt} einzustellen. Hierbei kann auch eine Hysterese um die Umschaltpunkte nᵢ für eine unterlagerte Antriebs-Stromregelung gelegt werden, um sehr häufiges Umschalten zu verhindern.

In einer weiteren vorteilhaften Ausgestaltung der Erfindung, insbesondere bei einer Strommessung für eine unterlagerte Antriebs-Stromregelung wird bevorzugt eine Stufenfunktion, wie zuvor beschrieben, mittels der Steuerungseinrichtung geregelt, was bei einer häufig zu verwendenden Synchronisation der Antriebs-Regelung auf die PWM-Frequenz für ein deterministisches Antriebsverhalten vorteilhaft ist, da die Strom-Messung zu bestimmten Zeitpunkten innerhalb der PWM-Periode erfolgen muss.

Ein weiterer Aspekt der vorliegenden Erfindung betrifft ein Verfahren zum Betrieb eines mit einem Elektromotor gekoppelten (wie zuvor beschriebenen) Pulswechselrichters bei dem die Drehzahl n des Elektromotors erfasst wird und der Steuerungseinrichtung als Eingangsgröße zugeführt wird, wobei diese die Schaltfrequenz f_{schalt} des Pulswechselrichters in Abhängigkeit der Drehzahl n des Elektromotors einstellt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Ansicht einer nicht-erfindungsgemäßen Steuerungskurve die abhängig von der Drehzahl n des Elektromotors realisiert ist, wobei ferner der Verlauf der Motorleistung P_{Lüfter} aufgetragen ist;
- Fig. 2: eine Ansicht einer nicht-erfindungsgemäßen Steuerungskurve mit abgestuftem Verlauf, die abhängig von der Drehzahl n des Elektromotors realisiert ist, wobei ferner der Verlauf der Motorleistung P_{Lüfter} aufgetragen ist;
- Fig. 3: eine Ansicht einer alternativen erfindungsgemäßen Steuerungskurve bei der ein mehrfach abgestufter Verlauf abhängig von der Drehzahl n des Elektromotors realisiert ist.

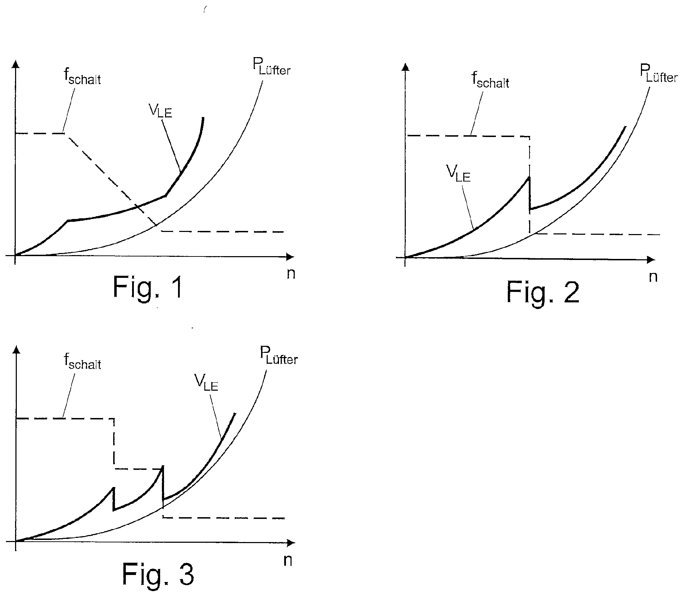

Im Folgenden wird die Erfindung anhand von Ausführungsbeispielen mit Bezug auf die Figuren 1 bis 3 näher beschrieben.

In den Grafiken ist die Abhängigkeit der Schaltfrequenz f_{schalt} eines mit einem Lüfter verbundenen Pulswechselrichters in Abhängigkeit der Drehzahl n des Lüfters dargestellt.

In der Fig. 1 ist eine nicht-erfindungsgemäße Steuerungsskurve dargestellt, bei der ein linearer Verlauf abhängig von der Drehzahl n des Elektromotors realisiert ist, wobei in einem ersten Drehzahlbereich bis zu einer Drehzahl n₁ eine konstante Schaltfrequenz f_{schalt} verwendet wird, die dann bis zu einer Drehzahl n₂ linear abnimmt und konstant mit einer niedrigen Schaltfrequenz f_{schalt} weiter geführt ist. Ferner ist beispielhaft der entsprechende Verlauf der Motorleistung P_{Lüfter} dazu aufgetragen, die in dritter Potenz zur Drehzahl ansteigt.

In der Fig. 2 ist eine nicht-erfindungsgemäßen Steuerungskurve dargestellt, bei der ein abgestufter Verlauf abhängig von der Drehzahl n des Elektromotors realisiert ist, wobei in einem ersten Drehzahlbereich bis zu einer Drehzahl n₁ eine konstante Schaltfrequenz f_{schalt} verwendet wird, die dann sprunghaft reduziert wird und konstant mit einer niedrigen Schaltfrequenz f_{schalt} weiter geführt ist. Ferner ist der entsprechende Verlauf der Motorleistung P_{Lüfter} dazu aufgetragen. aufweist.

In der Fig. 3 ist eine Steuerungskurve ähnlich der Figur 2 dargestellt, bei der allerdings ein zweifach abgestufter Verlauf abhängig von der Drehzahl n des Elektromotors realisiert ist, wobei in einem ersten Drehzahlbereich bis zu einer Drehzahl n₁ eine konstante Schaltfrequenz f_{schalt} verwendet wird, die dann sprunghaft reduziert wird und konstant mit einer niedrigen Schaltfrequenz f_{schalt} bis zu einer Drehzahl n₂ weiter geführt ist. Diese Schaltfrequenz f_{schalt} wird dann bei Erreichen der Drehzahl n₂ erneut sprunghaft um einen bestimmten Wert reduziert wird und konstant mit einer noch niedrigen Schaltfrequenz f_{schalt} weiter geführt ist. Ferner ist der entsprechende Verlauf der Motorleistung P_{Lüfter} dazu aufgetragen, die an dem jeweiligen Sprung des Verlaufs der Schaltfrequenz f_{schalt} jeweils einen Leistungssprung aufweist.

## Patentansprüche

1. Pulswechselrichter mit variabel einstellbarer Schaltfrequenz zur Erzeugung eines Motorstromes für einen Elektromotor, wobei eine Steuerungseinrichtung vorgesehen und bestimmungsgemäß so ausgebildet ist, die Schaltfrequenz f_{schalt} des Pulswechselrichters in Abhängigkeit der Drehzahl n des Motors einzustellen, wobei ab einer Drehzahl n₁ eines Drehzahlbereichs des Elektromotors die Schaltfrequenz f_{schalt} des Pulswechselrichters reduziert wird, wobei die Schaltfrequenz f_{schalt} des Pulswechselrichters unmittelbar an die erfasste Drehzahl des damit betriebenen Elektromotors gekoppelt ist und die Schaltfrequenz f_{schalt} des Pulswechselrichters gemäß einer nicht-linearen Funktion in Abhängigkeit der Drehzahl n des damit gekoppelten Elektromotors verändert wird, **dadurch gekennzeichnet, dass** die Schaltfrequenz f_{schalt} des Pulswechselrichters gemäß einer Stufenfunktion mit drei Stufen anhand der Drehzahl n des damit gekoppelten Elektromotors verändert wird, wobei für jeweils einen vorbestimmten Drehzahlbereich nᵢ eine feste Schaltfrequenz f_{schalt,i} des Pulswechselrichters eingestellt wird.

2. Pulswechselrichter nach Anspruch 1, **dadurch gekennzeichnet, dass** die Schaltfrequenz f_{schalt} des Pulswechselrichters bei niedrigen Drehzahlen im Bereich des Drehzahlbereichs des Elektromotors oberhalb einer definierten Frequenz liegt.

3. Pulswechselrichter nach einem der vorhergehenden Ansprüche, **dadurch gekennzeichnet, dass** eine Strommessung über eine Strommesseinrichtung erfolgt.

4. Verfahren zum Betrieb eines mit einem Elektromotor gekoppelten Pulswechselrichter nach einem der vorhergehenden Ansprüche, **dadurch gekennzeichnet, dass** die Drehzahl n des Elektromotors erfasst wird und der Steuerungseinrichtung als Eingangsgröße zugeführt wird, wobei diese die Schaltfrequenz f_{schalt} des Pulswechselrichters in Abhängigkeit der Drehzahl n des Elektromotors einstellt, derart dass die Schaltfrequenz f_{schalt} des Pulswechselrichters gemäß einer nicht-linearen Funktion in Abhängigkeit der Drehzahl n des damit gekoppelten Elektromotors verändert wird, wobei die Schaltfrequenz f_{schalt} des Pulswechselrichters gemäß einer Stufenfunktion mit drei Stufen anhand der Drehzahl n des damit gekoppelten Elektromotors verändert wird, wobei für jeweils einen vorbestimmten Drehzahlbereich nᵢ eine feste Schaltfrequenz f_{schalt,i} des Pulswechselrichters eingestellt wird.

## Claims

1. A pulse inverter with variably adjustable switching frequency for generating a motor current for an electric motor, wherein a control device is provided and is designed as intended to adjust the switching frequency f_{schalt} of the pulse inverter depending on the speed n of the motor, wherein, starting from a speed n₁ of a speed range of the electric motor, the switching frequency f_{schalt} of the pulse inverter is reduced, wherein the switching frequency f_{schalt} of the pulse inverter is coupled directly to the detected speed of the electric motor operated therewith and the switching frequency f_{schalt} of the pulse inverter is changed in accordance with a non-linear function depending on the speed n of the electric motor coupled thereto, **characterised in that** the switching frequency f_{schalt} of the pulse inverter is changed in accordance with a step function having three steps based on the speed n of the electric motor coupled thereto, wherein a fixed switching frequency f_{schalt,i} of the pulse inverter is adjusted for one predetermined speed range nᵢ each.

2. The pulse inverter of claim 1, **characterised in that** the switching frequency f_{schalt} of the pulse inverter at low speeds in the range of the speed range of the electric motor is above a defined frequency.

3. The pulse inverter of any one of the preceding claims, **characterised in that** a current measurement is carried out via a current measurement device.

4. A method for operating a pulse inverter of any one of the preceding claims coupled to an electric motor, **characterised in that** the speed n of the electric motor is detected and supplied to the control device as an input variable, wherein the control device adjusts the switching frequency f_{schalt} of the pulse inverter depending on the speed n of the electric motor such that the switching frequency f_{schalt} of the pulse inverter is changed in accordance with a non-linear function depending on the speed n of the electric motor coupled thereto, wherein the switching frequency f_{schalt} of the pulse inverter is changed in accordance with a step function having three steps based on the speed n of the electric motor coupled thereto, wherein a fixed switching frequency f_{schalt,i} of the pulse inverter is adjusted for one predetermined speed range nᵢ each.

## Revendications

1. Onduleur à commande par impulsions avec une fréquence de commutation réglable de manière variable pour générer un courant moteur pour un moteur électrique, dans lequel un dispositif de commande est prévu et conçu selon l'invention pour régler la fréquence de commutation f_{commut} de l'onduleur à commande par impulsions en fonction de la vitesse n du moteur, dans lequel, à partir d'une vitesse n1 d'une plage de vitesses du moteur électrique, la fréquence de commutation f_{commut} de l'onduleur à commande par impulsions est réduite, la fréquence de commutation f_{commut} de l'onduleur à commande par impulsions étant directement couplée à la vitesse détectée du moteur électrique qui fonctionne avec celui-ci et la fréquence de commutation f_{commut} de l'onduleur à commande par impulsions étant modifiée selon une fonction non linéaire en fonction de la vitesse n du moteur électrique qui lui est couplé, **caractérisé en ce que** la fréquence de commutation f_{commut} de l'onduleur à impulsions est modifiée selon une fonction en escalier à trois niveaux en fonction de la vitesse n du moteur électrique qui lui est couplé, une fréquence de commutation fixe f_{commut,i} de l'onduleur à impulsions étant réglée pour chaque plage de vitesse prédéterminée n₁.

2. Onduleur à impulsions selon la revendication 1, **caractérisé en ce que** la fréquence de commutation f_{commut} de l'onduleur à impulsions est supérieure à une fréquence définie à faible vitesse dans la plage de vitesse du moteur électrique.

3. Onduleur à impulsions selon l'une quelconque des revendications précédentes, **caractérisé en ce qu'**une mesure du courant est effectuée à l'aide d'un dispositif de mesure du courant.

4. Procédé pour faire fonctionner un onduleur à impulsions couplé à un moteur électrique selon l'une quelconque des revendications précédentes, **caractérisé en ce que** la vitesse de rotation n du moteur électrique est détectée et transmise au dispositif de commande en tant que grandeur d'entrée, lequel règle la fréquence de commutation f_{commut} de l'onduleur à impulsions en fonction de la vitesse de rotation n du moteur électrique, de telle sorte que la fréquence de commutation f_{commut} de l'onduleur à impulsions est modifiée selon une fonction non linéaire en fonction de la vitesse de rotation n du moteur électrique qui lui est couplé, la fréquence de commutation f_{commut} de l'onduleur à impulsions étant modifiée selon une fonction à trois niveaux à partir de la vitesse de rotation n du moteur électrique qui lui est couplé, une fréquence de commutation fixe f_{commut,i} de l'onduleur à impulsions étant réglée pour chaque plage de vitesse de rotation prédéfinie nⱼ.
